## Europäisches Patentamt
## European Patent Office
## Office européen des brevets

(19)

(11) Numéro de publication: **0 109 880**
**B1**

(12) **FASCICULE DE BREVET EUROPEEN**

(45) Date de publication du fascicule du brevet:
28.01.87

(51) Int. Cl.⁴: **H 04 B 1/64**

(21) Numéro de dépôt: **83402124.8**

(22) Date de dépôt: **28.10.83**

(54) **Dispositif de traitement de la parole pour équipement émetteur-récepteur radioélectrique adapté pour la transmission et la réception de la parole.**

(30) Priorité: **10.11.82 FR 8218905**

(43) Date de publication de la demande:
**30.05.84 Bulletin 84/22**

(45) Mention de la délivrance du brevet:
**28.01.87 Bulletin 87/5**

(84) Etats contractants désignés:
**DE GB**

(56) Documents cités:
**US - A - 4 271 499**

**ELECTRONIC ENGINEERING, vol. 42, no. 506, avril 1970, pages 74-77, Londres, GB. E. S. SHARP: "High-quality radiotelephone communication"**

(73) Titulaire: **THOMSON-CSF, 173, Boulevard Haussmann, F-75379 Paris Cedex 08 (FR)**

(72) Inventeur: **Deman, Pierre, THOMSON-CSF SCPI 173, bld Haussmann, F-75379 Paris Cedex 08 (FR)**
Inventeur: **Potage, Jean, THOMSON-CSF SCPI 173, bld Haussmann, F-75379 Paris Cedex 08 (FR)**

(74) Mandataire: **Lincot, Georges et al, THOMSON-CSF SCPI 19, avenue de Messine, F-75008 Paris (FR)**

ACTORUM AG

## Description

La présente invention concerne un dispositif de traitement de la parole pour équipement émetteur-récepteur radioélectrique adapté pour la transmission et la réception de la parole, pouvant être utilisé, notamment, en radiotéléphonie.

On connaît des systèmes analogiques de traitement de la parole, pour transmission sur voie radio du type de celui connu sous la dénomination «LINCOMPEX» et dont une description peut être trouvée dans le brevet US 4 271 499, qui permettent à l'aide d'une atténuation variable à l'émission de maintenir un niveau de modulation de la parole à peu près constant pendant une durée voisine de quelques dizaines de millisecondes, ce qui améliore notablement le rapport signal/bruit obtenu en réception. Dans ces systèmes, la valeur de l'atténuation introduite à l'émission est transmise par un canal auxiliaire multiplexé en fréquence, par modulation en fréquence d'une sous porteuse située dans le haut de la bande téléphonique, pour commander un expanseur situé au niveau du récepteur, qui n'est autre qu'un atténuateur fonctionnant à l'inverse de celui de l'émetteur, de façon à retrouver le niveau de parole existant avant sa compression. Ces systèmes purement analogiques sont utilisés en radiotéléphonie dans la gamme des ondes décamétriques.

Un perfectionnement au système «LINCOMPEX» est connu sous la dénomination «SYNCOMPEX». Dans le système «SYNCOMPEX» la parole est traitée par paquets de durée finie (13,33 millisecondes) et une voie auxiliaire sous la forme d'un canal radioélectrique de fréquence auxiliaire est codée en numérique. Les codes correspondants sont transmis par un système de modulation à saut de fréquence du type «FSK» où «FSK» est l'abréviation du terme anglo-saxon «Frequency shift keying», et travaillant en diversité sur deux sous porteuses introduites dans la bande vocale. Dans ce système les composantes de parole existant dans les bandes utilisées, pour transmettre les canaux «FSK» sont éliminées. La transmission en diversité permet, en transmettant l'information numérique selon deux canaux différents, de choisir à la réception le canal qui présente le meilleur rapport signal/bruit et par conséquent de limiter au maximum les erreurs de transmission.

Un problème se pose cependant, par l'utilisation dans ces systèmes d'algorithmes dits adaptatifs, mettant en œuvre, par exemple, des méthodes de codage différentiel pour coder la parole sous forme numérique et exploiter les particularités de la dynamique de la parole et des différences de sensibilité de l'audition aux diverses dégradations, pour réduire le débit binaire des informations de parole transmises entre émetteurs récepteurs, car ces dispositions ont toujours pour résultat que la réduction du débit des échantillons de parole codés accroit la sensibilité aux erreurs de transmission et que ces erreurs ne peuvent être corrigées par des procédés de traitement simples.

On sait, en effet, que la dynamique des variations d'amplitude du signal de parole produit par un locuteur se compose d'un terme syllabique et d'un terme mélodique.

Le terme syllabique a une amplitude importante de 30 décibels environ pour un locuteur et sa bande de fréquence va des fréquences très basses à une dizaine de hertz, la cadence moyenne syllabique étant en général voisine de 4 à 7 hertz. Le terme syllabique est en pratique non significatif pour l'intelligibilité de la parole et intervient peu pour l'agrément. Il est cependant exploité en transmission, pour améliorer le confort d'écoute, en supprimant le bruit radioélectrique dans les silences de parole et en téléphonie traditionnelle, par la conservation de l'équivalent, pour stabiliser les circuits amplificateurs.

Le terme mélodique a une amplitude plus limitée de 10 à 15 décibels et sa bande de fréquence couvre un spectre de 60 à 250 hertz suivant les individus. Le terme mélodique est par contre extrêmement significatif pour l'agrément de l'audition et la reconnaissance du locuteur, la reproduction de sa fréquence est donc particulièrement importante.

Malheureusement dans les transmission numériques adaptatives de la parole connues, le bruit de transmission contient au moins autant de fréquences harmoniques du spectre mélodique que de signaux significatifs d'adaptation syllabique, ce qui provoque des erreurs à la réception qui ne peuvent être éliminées par des procédés de traitement simples à l'aide, par exemple, de filtres analogiques.

La présente invention a pour but de remédier aux inconvénients précités.

A cet effet, l'invention a pour objet, un dispositif de traitement de la parole d'équipement émetteur-récepteur radioélectrique adapté pour la transmission et la réception de la parole, du type comprenant un circuit de compression de la dynamique du signal de parole pour maintenir le niveau de modulation de la parole à peu près constant durant l'émission de la parole et un expanseur pour rétablir à la réception le niveau de parole avant sa compression, ainsi qu'un dispositif de commande de l'expanseur sensible à la valeur de l'atténuation introduite par le circuit de compression, et transmise sur un canal radioélectrique de fréquence auxiliaire de l'équipement, caractérisé en ce que le circuit de compression est un circuit de compression incrémental, à action anticipée dans le temps comprenant une ligne à retard reliée à un premier atténuateur variable pour retarder le signal de parole et l'atténuer avant son émission ainsi qu'un deuxième atténuateur variable du signal de parole, et en ce que le dispositif comprend en outre un circuit de filtrage logique du niveau de parole d'émission couplé au deuxième atténuateur variable pour commander les premier et deuxième atténuateurs du circuit de compression par pas d'atténuation constants de façon à maintenir le niveau de parole d'émission à peu près constant et pour transmettre par le canal auxiliaire les valeurs d'atténuation incrémentales correspondantes, et en ce que le dispositif de commande de l'expanseur comprend un circuit d'interpolation, pour corriger les présomptions d'erreurs des signaux reçus représentatifs des valeurs d'atténuation introduites à l'émission par le circuit de filtrage logique.

Les avantages obtenus par le dispositif selon l'invention sont, d'une part, de permettre de constituer un véritable dispositif de filtrage à la réception, pour séparer le bruit des signaux significatifs d'adaptation et d'autre part, en corollaire, de corriger les erreurs de transmission qui engendreraient un signal parasite dont le spectre de fréquence contiendrait des fréquences du spectre mélodique. Le premier objectif est atteint, grâce au compresseur incrémental à action anticipée dans le temps qui permet l'anticipation du signal d'adaptation en retardant le signal de parole, de façon à transmettre correctement les débuts des syllabes où l'amplitude croît rapidement, celles-ci étant transmises en phase avec les signaux d'adaptation. La transmission des signaux d'adaptation, ayant lieu de manière décalée dans le temps par rapport au signal acoustique auquel il se rapporte, permet d'obtenir à la réception une meilleure qualité des décisions qui doivent être prises au niveau de l'élaboration des commandes d'adaptation, tout en permettant par des moyens appropriés de remettre en coïncidence temporelle le signal d'adaptation avec le signal acoustique reçu. Le deuxième objectif est atteint par le circuit d'interpolation qui permet de corriger les erreurs de transmission susceptibles de produire un signal d'adaptation dont les fréquences correspondent à celles du spectre mélodique. Enfin, les actions combinées du filtre logique et du retard introduit dans la transmission du signal de parole, par le circuit de compression à action anticipée, permettent une réduction notable de la bande passante du canal auxiliaire.

D'autres caractéristiques et avantages de l'invention apparaîtront également à l'aide de la description qui va suivre faite en regard des dessins annexés donnés uniquement à titre d'exemple et dans lesquels:

La figure 1 représente le schéma synoptique du dispositif de l'invention placé dans un terminal radio en émission-réception simultanée et permanente dans les deux sens de transmission (mode duplex).

La figure 2 est une réalisation du circuit de filtrage logique de l'invention associé à un codeur différentiel.

Les figures 3 à 5 sont des représentations du circuit d'interpolation de réception.

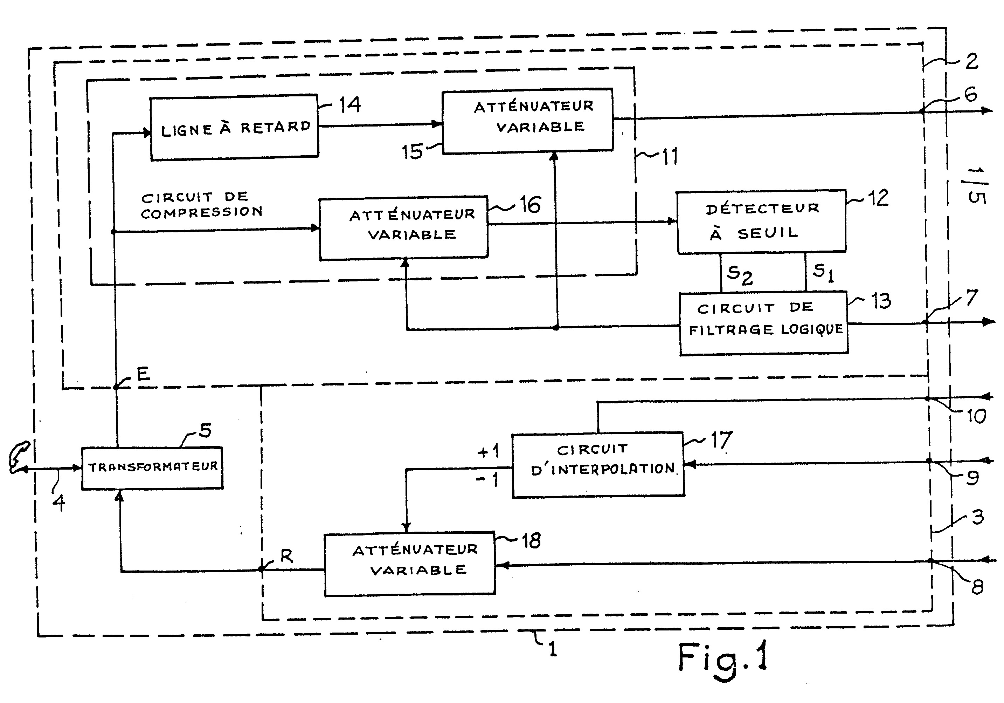

Le dispositif 1 selon l'invention, représenté à la figure 1, comprend une partie émission 2 et une partie réception 3. Il est relié à une ligne téléphonique 4 sur laquelle transitent les signaux de parole par l'intermédiaire d'un transformateur hybride 5. L'entrée du transformateur hybride 5 qui n'est pas reliée à la ligne téléphonique 4 est directement reliée à la sortie R de la partie réception 3 et la sortie du transformateur 5 est reliée directement à l'entrée E de la partie émission 2. La partie émission 2, du dispositif, est reliée par une sortie 6 au circuit radioélectrique d'émission de l'émetteur, non représenté, et transmet à ce dernier un signal de parole dont le niveau est maintenu à peu près constant. La partie émission 2 comprend également une sortie 7 qui est reliée au circuit d'émission de l'émetteur, non représenté, pour transmettre l'information codée de niveau sur un canal auxiliaire de l'émetteur non représenté. La partie réception 3 comprend une entrée 8 qui est reliée au circuit de réception, non représenté, de l'émetteur-récepteur, pour recevoir le signal de parole démodulé. La partie réception comprend également une entrée 9 et une entrée 10. L'entrée 9 est reliée au circuit de réception de l'émetteur-récepteur, non représenté, connecté au canal auxiliaire de niveau. L'entrée 10 est reliée au circuit de démodulation non représenté du récepteur et reçoit de celui-ci un signal de pondération e, lorsqu'une incertitude existe sur le contenu démodulé des informations reçues par le canal auxiliaire. La partie émission 2 est constituée par un circuit de compression 11 relié à un détecteur à seuil 12 et un circuit de filtrage 13. Le circuit de compression 11 est constitué par une ligne à retard 14, située entre l'entrée E de la partie émission et l'entrée d'un atténuateur variable 15. Le circuit de compression 11 comprend également un atténuateur variable 16 dont l'entrée est reliée à l'entrée E de la partie émission 2 et dont la sortie est connectée à l'entrée du détecteur à seuil 12. Le détecteur à seuil 12 est relié par ses sorties $S_1$ et $S_2$ à des entrées respectives du circuit de filtrage logique 13. Le circuit de filtrage logique 13 comprend deux sorties dont l'une, est reliée à la sortie 7 du dispositif et dont l'autre, est reliée aux entrées de commande des atténuateurs variables 15 et 16. La sortie de l'atténuateur variable 15 est reliée à la sortie 6 du dispositif pour transmettre le signal de parole d'émission. La partie réception est constituée par un circuit d'interpolation 17 relié par deux entrées aux entrées 9 et 10 du dispositif 1 qui reçoivent respectivement l'information de niveau reçue par le canal auxiliaire et le signal de pondération e dont la présence est caractéristique d'une présomption d'erreur sur l'information de niveau simultanée reçue. Le circuit d'interpolation 17 à une sortie reliée directement à l'entrée de commande de l'atténuateur variable 18. L'atténuateur variable 18 a une entrée reliée directement à la borne 8 du dispositif 1 pour recevoir le signal de parole démodulé par les circuits du récepteur, non représentés, et une sortie reliée directement à la sortie R de la partie réception.

Le fonctionnement du dispositif représenté à la figure 1 est le suivant. Le signal de parole qui est transmis par la voie téléphonique 4, est appliqué à l'entrée E de la partie réception 2 par l'intermédiaire du transformateur hybride 5. Le signal de parole traverse le circuit de compression 11 au travers successivement de la ligne de retard 14 et l'atténuateur 15 et sort sur la sortie 6 du dispositif 1. Le détecteur à seuil 12 indique les changements de niveau de puissance du signal de parole non retardé, traversant l'atténuateur 16 au circuit de filtrage logique 13 par l'intermédiaire des sorties $S_1$ et $S_2$. Le circuit de filtrage logique 13, en fonction des changements de niveau détectés par le détecteur à seuil 12, commande des atténuateurs 15 et 16 et le codage de l'information de niveau qui est transmise par la borne 7.

A la réception, le signal de parole, démodulé par les circuits du récepteur, non représentés, est appliqué sur la borne 8 à l'entrée de l'atténuateur variable 18 qui est commandé par le circuit d'interpolation 17. L'atténuateur variable 18 commandé par le circuit d'interpolation 17 assure l'expansion de dynamique du signal de parole, pour reconstruire, à l'entrée du transformateur hybride 5, le signal vocal avec sa dynamique d'origine restituée. Le circuit d'interpolation 17 exploite l'information de niveau codée, contenant les décisions d'atténuation de niveau transmises par le canal auxiliaire de niveau appliquée sur l'entrée 9 ainsi que le signal de pondération e, appliqué sur l'entrée 10 qui sera par exemple, un simple signal d'effacement de la décision de modification de l'atténuation de niveau reçue. Cette solution sera applicable, particulierement toutes les fois que la transmission radio sera affectée d'évanouissements et que l'information de niveau transmise sur le canal de niveau sera entrelacée dans une trame numérique contenant le canal de parole. On pourra ainsi dans une transmission de parole à 16 k/bits par seconde, transmettre une information binaire correspondante sur le canal de niveau tous les 48 bits. Il sera donc possible, dans ce cas, de fournir un signal de qualification valable pour les 49 bits en cas d'évanouissements. La décision de commande de l'atténuateur 18 sera prise en tenant compte des contraintes imposées pour la transmission du signal pour redonner aux éléments binaires effacés, des valeurs introduisant le minimum de composantes situées dans la bande de fréquence mélodique. Les atténuateurs 15, 16 et 18 utilisés pour la réalisation du mode préféré de l'invention, sont des atténuateurs incrémentaux statiques, constitués à la façon d'une boîte de poids, pouvant introduire pas à pas à une cadence d'horloge déterminée une atténuation différentielle, par exemple, de 0, +3, −3 décibels toutes les 6 millisecondes. Le codage de l'information de niveau pourra consister en une suite d'éléments binaires ayant une première configuration lorsque le niveau avant compression du terme syllabique de la parole est en phase positive de croissance, une deuxième configuration lorsque le niveau du terme syllabique de la parole est en phase négative de décroissance et au moins une troisième configuration lorsque le niveau du terme syllabique conserve une valeur à peu près constante. Dans la suite de la description, un codage du type «delta» est employé pour coder l'information de niveau. Les commandes d'incrémentation fournies par la logique de filtrage et par le circuit d'interpolation ne seront rendues effectives que lorsque 2 signaux de codage de niveau, reçus consécutivement auront la même valeur. Ainsi, si A et Z désignent respectivement les signaux du codage «delta» utilisé, une augmentation ou une diminution du niveau de parole au-dessus ou en dessous des seuils acceptables sera codée à l'aide de 2 signaux ZZ consécutifs pour commander une atténuation de +3 décibels et à l'aide de 2 signaux AA consécutifs pour commander une atténuation de −3 décibels. Aucune atténuation ne sera commandée lorsque les signaux consécutifs reçus seront alternés, combinés de la façon ZA ou AZ. La transmission des signaux A et Z sur le canal auxiliaire est effectuée en utilisant une sous porteuse de fréquence $f_0$ pour la transmission du signal A et une sous porteuse de fréquence $f_1$ pour la transmission du signal Z. Dans une première variante simple de réalisation de l'invention le dispositif pourra ne prendre aucune décision d'incrémentation lorsque l'un des deux signaux A ou Z sera marqué par la présence simultanée du signal de pondération e indiquant une présomption d'erreur sur le signal reçu.

Selon une deuxième variante plus complexe de réalisation de l'invention, la commande des atténuateurs pourra avoir lieu de façon à ne prendre en compte que les variations de niveau correspondant au terme syllabique de la parole, en respectant les phases alternées consécutives de croissance et de décroissance. La durée des commandes sera choisie pour que la fréquence fondamentale des signaux de commande des atténuateurs ne dépasse pas 10 hertz. La commande d'accroissement sera effectuée, lorsque, le signal de crête détecté par le détecteur 12 dépassera un premier seuil et la commande de décroissance sera effectuée, lorsque, le signal détecté par le détecteur à seuil 12 durant une période de temps élémentaire sera inférieure à un second seuil, par exemple, inférieure à un seuil de 3 décibels au premier seuil pendant une durée supérieure à la plus longue période mélodique, soit 18 millisecondes environ, avec absence de dépassement du premier seuil pendant ce temps. Il sera possible de choisir, pour les phases d'accroissement, ci-après désignées, phase positive et de décroissance, ci-après désignées, phase négative, une durée minimum pour chacune d'elles de 42 millisecondes et dans ce cas la période fondamentale du terme syllabique de parole ne pourra être inférieure à 99 millisecondes.

Les détails de réalisation des atténuateurs variables 15 et 16 sont de la compétance de l'homme de l'art, ils pourront être réalisés par exemple, par des ponts de résistances d'atténuation, connectés électroniquement au moyen de diodes PIN.

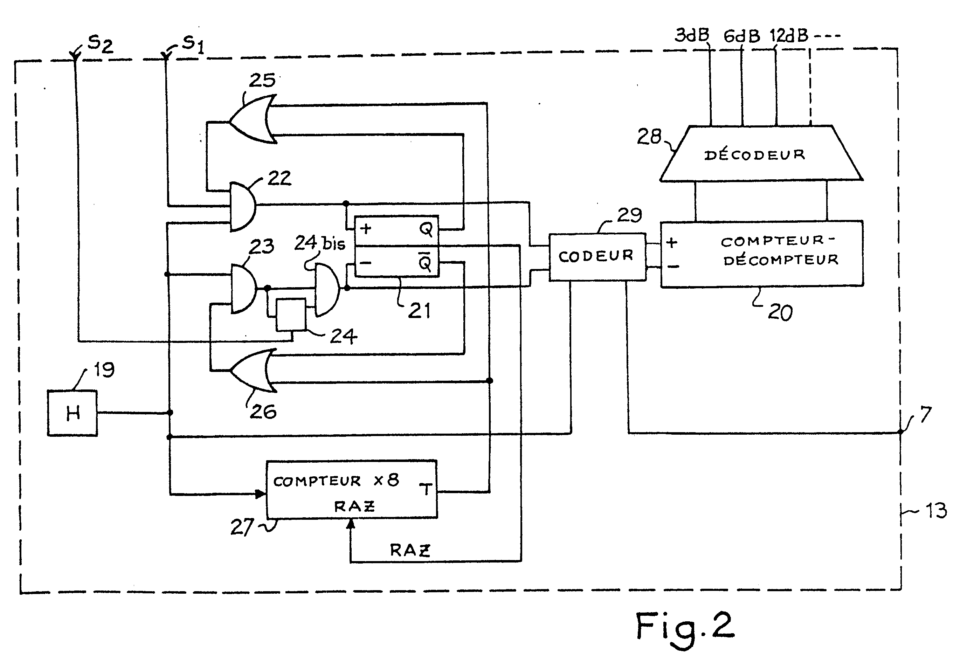

Une réalisation de la logique de filtrage 13 est maintenant décrite à l'aide du schéma de la figure 2. La logique de filtrage 13 est constituée par une horloge 19, un compteur-décompteur 20, un basculeur 21 commandé par des portes 22 et 23, un compteur 24 associé à une porte ET 24 bis, des portes OU 25 et 26, un compteur temporisateur 27, un décodeur 28 relié par ses entrées aux sorties du compteur-décompteur 20 ainsi qu'un codeur 29 de l'information de niveau. Le compteur-décompteur 20 délivre sur ses sorties des signaux qui sont décodés par le décodeur 28 pour commander la valeur d'atténuation des atténuateurs variables 15 et 16. Le compteur-décompteur 20 est commandé au travers du codeur 29 en mode de comptage, sur son entrée marquée « + », par la sortie de la porte ET 22 et en mode de décomptage, sur son entrée marquée « − » par la sortie de la porte ET 24 bis. La porte ET 22 a trois entrées, une première entrée est reliée à la sortie $S_1$ du détecteur à seuil 12 qui transmet le signal de dépassement du niveau de parole au-dessus du premier seuil, une deuxième entrée est reliée à la sortie de l'horloge 19 et la troisième entrée est reliée à la sortie de la porte OU 25. La porte OU 25 a deux entrées, une première entrée est reliée à la sortie Q du basculeur 21 et la deuxième entrée est reliée à la première entrée de la porte OU 26 ainsi qu'à la sortie marquée T du compteur 27. La porte ET 23 a deux entrées, une première entrée est reliée à la sortie de l'horloge 19 et la deuxième entrée est reliée à la sortie de la porte OU 26. La sortie de la porte ET 23 est reliée, d'une part, à une première entrée de la porte ET 24 bis et d'autre part, à l'entrée de comptage du compteur 24. La sortie de comptage du compteur 24 est reliée à la deuxième entrée de la porte ET 24 bis. L'entrée de remise à zéro du compteur 24 est reliée à la sortie $S_2$ du détecteur à seuil de la figure 1. De cette façon le compteur 24, commandé par l'horloge 19 sur autorisation de la porte OU 26 par la porte ET 23, est remis à zéro par la présence d'un signal sur la sortie $S_2$ du détecteur à seuil 12. Si le signal à la sortie $S_2$ du détecteur à seuil 12 est absent pendant un nombre déterminé d'impulsions d'horloge 19, le compteur 24 totalise le nombre d'impulsions correspondant et à la fin de comptage commande l'ouverture de la porte 24 bis.

La porte OU 26 a deux entrées, une première entrée est reliée à la sortie marquée T du compteur 27 et la deuxième entrée est reliée à la sortie $\overline{Q}$ du basculeur 21. L'entrée d'horloge du compteur 27 est reliée à la sortie de l'horloge 19 et a son entrée RAZ de remise à zéro reliée au basculeur 21 qui transmet une impulsion de remise à zéro au compteur 27, chaque fois que le basculeur 21 change d'état. Les sorties du décodeur 28 sont reliées directement aux entrées de commande des atténuateurs variables 15 et 16, pour transmettre les valeurs d'atténuation à pas constant de 3, 6, 12 décibels etc... et modifier leur taux d'atténuation par pas successifs de +3 ou −3 décibels. Le codeur 29 a ses entrées reliées respectivement aux sorties des portes ET 22 et ET 24 bis et transmet aux circuits d'émission non représentés, en synchronisme avec les signaux d'horloge délivrés par l'horloge 19 des signaux pour coder l'information de niveau, par le codage de type « delta » précédemment décrit ainsi que les signaux de comptage et de décomptage appliqués sur les entrées « + » et « − » du compteur-décompteur 20.

Le fonctionnement de la logique de filtrage 13 représenté à la figure 2 est le suivant. Le signal d'horloge fourni par l'horloge 19 est un signal binaire à deux états de période de 6 millisecondes et est appliqué respectivement aux entrées correspondantes des portes ET 22, 23. Le signal d'horloge est retransmis par la porte ET 22, lorsqu'un signal de dépassement est délivré par la sortie $S_1$ du détecteur à seuil 12 de la figure 1 et lorsque la porte ET 22 est validée par la sortie de la porte OU 25. De même, le signal d'horloge délivré par l'horloge 19 est appliqué à l'entrée correspondante de la porte ET 23 et est retransmis par la sortie de la porte ET 23 lorsque l'autorisation est donnée par la sortie de la porte OU 26. Le signal de sortie de la porte ET 23 fait avancer le compteur 24. Si un signal de dépassement du second seuil apparaît sur la sortie $S_2$ du détecteur à seuil 12 de la figure 1, le compteur 24 est remis à zéro. Lorsque le compteur 24 a compté 3 impulsions de 6 ms, soit 18 ms sa sortie commande l'ouverture de la porte ET 24 bis. Les impulsions de sortie des portes ET 22 et 24 bis commandent respectivement les entrées marquées « + » et « − » du basculeur 21 et le codeur 29. Le codeur 29 émet, à chaque impulsion d'horloge 19, un signal binaire dont la valeur est fonction à la fois de la valeur du signal binaire précédent et de la commande de variation qui est dans l'hypothèse positive, négative ou nulle. Dans le cas d'une variation nulle, c'est-à-dire d'absence de variation du niveau vocal, le signal binaire émis par le codeur 29 sera l'inverse du signal précédent. A chaque accroissement du niveau vocal le premier signal binaire Z émis, sera suivi par un signal binaire Z de même état et à chaque décroissance le premier signal A émis sera suivi par un autre signal binaire A de même état. Le compteur-décompteur 20 est commandé par la sortie du codeur 29 sur son entrée « + » à chaque accroissement du signal vocal et sur son entrée « − » à chaque décroissance du signal vocal. A chaque basculement du basculeur 21, le compteur 27 est remis à zéro, puis il avance pas à pas à chaque impulsion d'horloge espacée de 6 millisecondes. Lorsque le compteur 27 a atteint sa capacité de comptage maximum, soit dans le cas de la figure 2 de 7 pas de 6 millisecondes, la sortie T du compteur-décompteur 27 autorise par l'intermédiaire des portes OU 25 et 26 le passage des impulsions de commande incrémentales, fournies par l'horloge 19, au travers des portes 22 et 23. Par contre, si les portes 22 et 24 bis sont validées respectivement par l'une des sorties $S_1$ ou $S_2$ du détecteur à seuil 12, en cours de comptage du compteur 27, la porte ET 22 n'est autorisée que si le basculeur 21 a déjà sa sortie Q à l'état 1 et la porte 24 bis n'est autorisée, au travers de la porte ET 23, que si le basculeur 21 a sa sortie $\overline{Q}$ à l'état 1, ce qui interdit, par cette réalisation, les changements comptage et de décomptage et vice versa, s'il ne s'est pas écoulé un temps déterminé de 42 millisecondes depuis le premier signal de la même phase ou le dernier changement de phase.

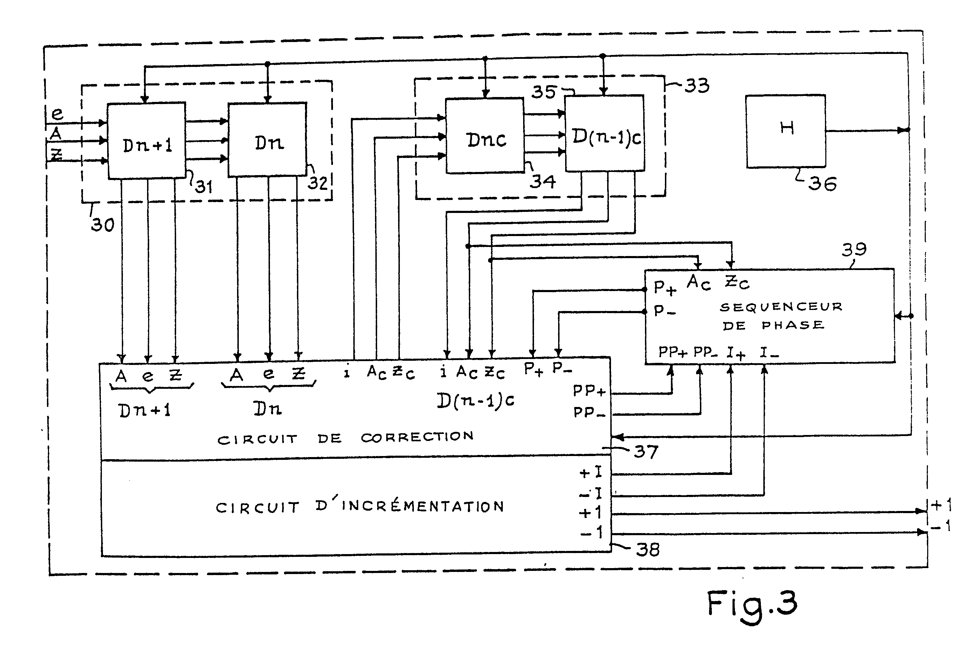

Un exemple de réalisation du circuit d'interpolation 17 est maintenant décrit à l'aide du schéma représenté à la figure 3. Le circuit d'interpolation 17 comprend, un ensemble de registres à décalage 30, composé des sous-ensembles de registres 31 et 32, un deuxième ensemble de registres à décalage 33 composé des sous-ensembles 34 et 35, un circuit 37 de correction des signaux représentant l'information de niveau reçue, un circuit d'incrémentation 38 pour commander en plus ou en moins un niveau d'atténuation de l'atténuateur 18, ainsi qu'un séquenceur de phase 39. Une horloge 36 assure la synchronisation entre tous les éléments du circuit d'interpolation 17. Le sous-ensemble de registre à décalage 31 a ses entrées reliées directement à l'entrée 9 du dispositif 1 de la figure 1 pour recevoir du démodulateur du récepteur, non représenté, les signaux A ou Z transmis par le canal auxiliaire correspondant aux décisions binaires d'accroissement ou de décroissance. Le sous ensemble de registres 31 est également relié à l'entrée 10 du dispositif 1 de la figure 1 pour recevoir la décision binaire d'effacement e infirmant lorsqu'il est présent la décision correspondant au signal A ou Z présent sur l'entrée 9. L'utilisation du signal d'effacement e constitue un procédé simple de pondération, particulièrement intéressant, lorsque la transmission est soumise à des variations importantes du rapport signal/bruit ou si la transmission est fortement brouillée. Les signaux e, A, Z appliqués à l'entrée du sous-ensemble à décalage 31 sont mémorisés dans ce dernier, dès l'apparition de l'impulsion du signal d'horloge transmis par l'horloge 36 et sont transférés à l'instant d'apparition de l'impulsion d'horloge suivante, du sous-ensemble du registre 31 dans le sous-ensemble du registre 32. Le sous-ensemble 32 contient par conséquent à chaque instant n+1 de parution d'une impulsion d'horloge, les données $D_n$ représentant les décisions e, A, Z reçues à l'instant n de parution de l'impulsion d'horloge précédente et le sous-ensemble 31 enregistre, à chaque instant de parution d'une impulsion d'horloge, les données $D_{n+1}$ représentant les décisions e, A, Z qui sont actuellement reçues par le dispositif de réception. Les données $D_n$ et $D_{n+1}$ sont transmises aux entrées correspondantes du circuit de correction 37 qui a pour but de corriger les décisions A ou Z retransmises par le circuit de démodulation, non représenté, au circuit d'interpolation 17, en tenant compte des contraintes introduites sur les signaux d'émission et qui correspondent aux conditions de succession de trois éléments binaires, imposés par le dispositif pour autoriser la commande des atténuateurs, en relation avec les décisions $A_c$ ou $Z_c$ antérieures déjà corrigées ou celles I jugées par le dispositif comme indéterminées. Le circuit de correction 37 élabore les corrections en fonction des décisions corrigées $D_{(n-1)c}$ de l'instant n-1, et des informations de phase P+ et P− reconstruites par le séquenceur de phase 39. Le sous-ensemble de registre 34 est relié par ses entrées au circuit de correction 37 pour mémoriser les décisions corrigées $A_c$ $Z_c$ élaborées par le circuit de correction 37. Les données mémorisées à l'intérieur des registres 34 sont transférées, à l'instant de l'impulsion d'horloge suivant, dans le sous-ensemble de registres 35 qui mémorise ainsi les données corrigées $D_{(n-1,c}$ de l'instant n-1 et qui serviront à la correction des décisions de l'instant n. Le sous-ensemble de registres 35 est dans ce but relié par ses sorties à des entrées correspondantes du circuit de correction 37, pour permettre au circuit de correction 37 l'élaboration des données de correction des données courantes reçues à l'instant n, en fonction des données déjà corrigées de l'instant n-1. Les données de correction établies par les circuits de correction 37 sont également transmises au circuit d'incrémentation 38 pour calculer à chaque instant n le taux d'incrémentation +1 ou −1 qui doit être appliqué par le circuit d'interpolation 17 sur l'entrée de commande de l'atténuateur variable 18 de la figure 1. Le circuit de correction 37 fournit également les signaux PP+ et PP− de présomption de passage en phase positive d'incrémentation et de présomption de passage en phase négative de décrémentation ainsi que les décisions de correction $A_c$ et $Z_c$ à destination des entrées correspondantes du séquenceur de phase 39 dans le but de vérifier qu'à la réception les contraintes imposées par le circuit 13 de filtrage logique à l'émission (figure 1) sont bien respectées. Pour cela le séquenceur de phase 39 qui reconstitue les phases positive ou négative de croissance et de décroissance du signal de parole déterminées à l'émission, applique les conditions de phase P+ et P− reconstituées aux entrées correspondantes du circuit de correction 37. Les conditions de phase P+ et P− sont également établies en fonction de signaux +1 et −1 transmis par le circuit d'incrémentation 38 aux entrées correspondantes du séquenceur de phase 39 qui correspondent aux décisions d'incréments +1 et −1.

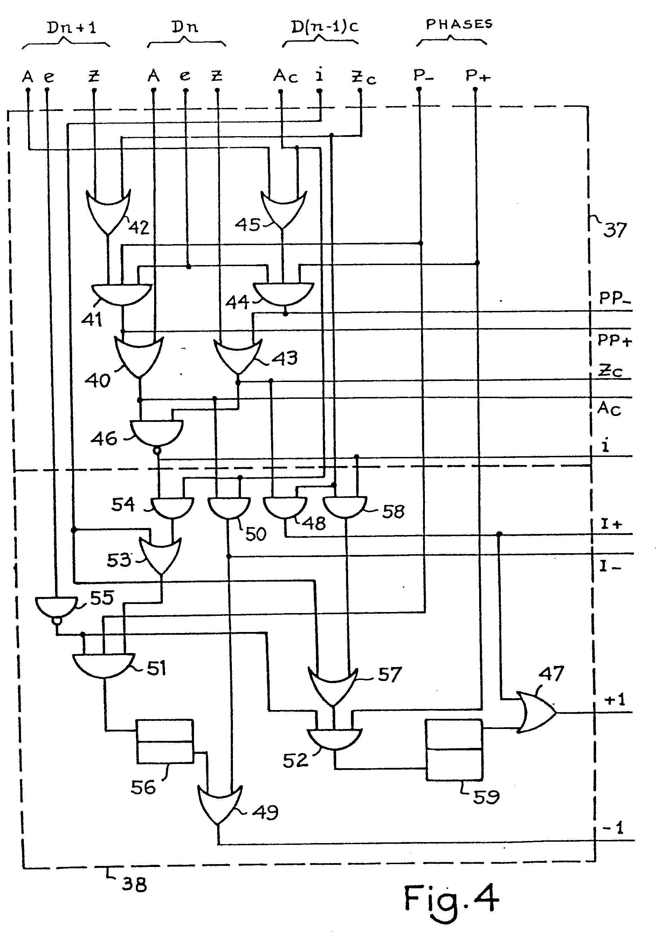

Des exemples de réalisation, du circuit de correction 37 et de l'incrémenteur 38, sont maintenant décrits à l'aide du schéma de réalisation de la figure 4. Sur la figure 4 le circuit de correction 37 est formé par l'ensemble des portes 40 à 46. La porte 40 détermine avec la porte 41 la décision de correction $A_c$ de l'information reçue. La porte 40 est une porte OU à deux entrées, reliées respectivement à la sortie de la porte 41 et à la sortie correspondante des registres 32 qui transmet le signal de décision A. La sortie de la porte 40 transmet la décision corrigée $A_c$ lorsque soit, une décision A est transmise par le registre 32 ou lorsqu'un signal PP+ de présomption de phase positive est transmis par la sortie de la porte 41. Le signal PP+ est transmis par la porte 41 à chaque instant n+1 lorsqu'un signal d'effacement «e» est fourni par le démodulateur de réception à l'instant n précédant alors que le séquenceur de phase 39 de la figure 3 indique que le dispositif traite un signal vocal en phase P− de décroissance et que les signaux de décision reçus aux instants n−1 et n+1 sont des signaux Z. Pour réaliser cette condition, la porte 41 est une porte ET à trois entrées, une première entrée est reliée à la sortie d'une porte OU 42 à deux entrées. Une deuxième entrée est reliée au séquenceur de phase 39 et reçoit le signal d'indication de phase P−, la troisième entrée est reliée au sous ensemble de registre 32 et reçoit la décision d'effacement «e». Une première entrée de la porte OU 42 est reliée au sous-ensemble de mémorisation 35 et reçoit la décision $Z_c$ corrigée de l'instant n−1. La deuxième entrée de la porte OU 42 est reliée au sous-ensemble de mémorisation 31 et reçoit la décision Z de l'instant N+1.

De façon à peu près similaire, la porte 43 détermine avec la porte 44 la décision de correction $Z_c$ de l'information reçue. La porte 43 est une porte OU à deux entrées reliées respectivement, à la sortie de la porte 44 et à la sortie correspondante des registres 32 qui transmet le signal de décision. La sortie de la porte 43 transmet la décision corrigée $Z_c$ lorsque soit, une décision Z est transmise par les registres 32 ou lorsqu'un signal PP− de présomption de phase négative est transmis par la sortie de la porte 44. Le signal PP− est transmis par la porte 44 à chaque instant n+1 lorsqu'un signal d'effacement «e» a été transmis par le démodulateur de réception à l'instant n précédent alors que le séquenceur de phase indique que le dispositif traite un signal vocal en phase «+» de croissance et que les décisions obtenues en réception aux instants n−1 et n+1 sont des décision A. Pour réaliser cette condition, la porte 44 est une porte ET à trois entrées, une première entrée est reliée à la sortie correspondante du séquenceur de phase 39 qui transmet l'information de phase P+ de croissance, la deuxième entrée est reliée à la sortie de la porte OU 45 qui reçoit sur une première entrée la décision corrigée $A_c$ contenue dans le sous-ensemble de registre 35 et sur sa deuxième entrée la décision A contenue dans le sous-ensemble de registre 31. La troisième entrée de la porte 44 est reliée à la sortie correspondante des registres 32 qui transmet le signal d'effacement. Les corrections fournies par les portes 40 et 43 expriment par conséquent le fait que en phase négative il ne peut y avoir une séquence consécutive de décisions Z, (ZZ), et qu'en phase positive il ne peut y avoir une séquence consécutive de décisions A, (AA). Les sorties des portes 40 et 43 sont reliées aux entrées respectives de la porte NON ET 46. La sortie de la porte 46 délivre une décision I, indéterminée, si aucune décision $A_c$ ou $Z_c$ apparaît aux sorties des portes 40 et 43.

Le circuit d'incrémentation 38 est formé des circuits logiques 47 à 59. La commande d'incrémentation marquée «+1» est fournie par la sortie de la porte OU 47 à deux entrées dont une première entrée est reliée à la sortie de la porte ET 48. La porte ET 48 a deux entrées, une première entrée est reliée à la sortie de la porte OU 43 et la deuxième entrée reçoit le signal $Z_c$ mémorisé à l'intérieur du sous-ensemble de registres 35. Suivant cette disposition, les circuits 47 et 48 autorisent une incrémentation de +3 décibels de l'atténuateur de réception lorsque les décisions contenues dans les registres 32 et 35 correspondent toutes les deux à une décision $Z_c$. La commande de décrémentation de −3 décibels est fournie par la sortie de la porte OU 49 à deux entrées dont une première entrée est reliée directement à la porte ET 50 à deux entrées. Une première entrée de la porte ET 50 est reliée directement à la sortie de la porte OU 40 et la deuxième entrée de la porte ET 50 reçoit directement la décision corrigée $A_c$ contenue dans le sous-ensemble de registres 35. Une commande de décrémentation de −3 décibels est par conséquent fournie par la porte OU 49 et par la porte ET 50, si les décisions contenues dans les sous-ensembles de registres 32 et 35 correspondent toutes les deux à une décision corrigée $A_c$. En l'absence de décision fournie par les sorties des portes OU 47 et 49, l'atténuation de l'atténuateur variable 18 de la figure 1 reste inchangée. Un autre circuit logique formé par les circuits 51 à 59 permet de traiter les cas qui, compte tenu de la phase dans laquelle se trouve le dispositif, peuvent être comptabilisés en moyenne, soit pour une incrémentation de 1/2 en phase positive, soit pour une incrémentation de −1/2 en phase négative. Ces cas sont collationnés sur les entrées des portes 51 et 52 à trois entrées. La porte ET 51 est reliée par une première entrée à la sortie d'une porte OU 53 à deux entrées dont une première entrée est reliée directement à la sortie de la porte ET 54. La porte ET 54 a deux entrées, une première entrée reçoit la décision corrigée $A_c$ contenue dans le sous-ensemble de registres 35 et la deuxième entrée est reliée directement à la sortie de la porte NON ET 46. La deuxième entrée de la porte OU 53 reçoit la décision indéterminée i du sous-ensemble de registres 35. La deuxième entrée de la porte ET 51 reçoit le signal de phase P− du séquenceur de phase 39. La troisième entrée de la porte ET 51 est reliée directement à la sortie de l'inverseur 55. La sortie de la porte 51 est reliée directement à l'entrée du basculeur bistable 56 dont la sortie est reliée directement à la deuxième entrée de la porte OU 49.

Le basculeur 56 est commandé par la porte ET 51 chaque fois que d'une part, le dispositif est en phase négative P− que d'autre part, la décision prise à un instant n+1 contenue dans le registre 31 n'est pas un effacement, et que la décision prise à l'instant précédent n était indéterminée alors que la décision prise à l'instant n−1 était une décision A.

De façon à peu près similaire la porte ET 52 a une première entrée reliée à la sortie d'une porte OU 57 à deux entrées. Une première entrée de la porte OU 57 est reliée à la sortie de la porte ET 58 à deux entrées dont une première entrée est reliée à la sortie du circuit NON ET 46 et dont la deuxième entrée reçoit la décision corrigée $Z_c$ contenue dans le sous-ensemble de registres 35. La deuxième entrée de la porte ET 52 reçoit le signal de phase P+ transmis par le séquenceur de phase 39 de la figure 3. La troisième entrée de la porte ET 52 est reliée directement à la sortie de l'inverseur 55. La sortie de la porte ET 52 est reliée directement à l'entrée d'un basculeur bistable 59 dont la sortie est reliée directement à la deuxième entrée de la porte OU 47.

Le basculeur 59 est commandé par la porte ET 52 chaque fois que, d'une part, le dispositif est en phase positive P+, que, d'autre part, la décision prise à un instant n+1 contenue dans le registre 31 n'est pas un effacement et que la décision prise à l'instant n était indéterminée, alors que la décision prise à l'instant n−1 était une décision Z.

L'ensemble des circuits 49 et 59 permet une récupération des décisions indéterminées qui en phase négative peuvent être considérées comme ayant une valeur moyennes de 1/2, puisqu'elles ne peuvent être corrigées ni en 0 ni en +1. Les basculeurs 56 et 59 éliminent une décision sur deux, transmises par les portes 51 et 52 et les incréments qu'elles mémorisent viennent se rajouter à ceux transmis respectivement par les portes 48 et 50 aux moyens des circuits OU 47 et 49. Les incréments +1 et −1 transmis respectivement par la porte 47 et 49 sont appliqués à l'atténuateur à chaque impulsion d'horloge. De même, à chaque impulsion d'horloge, les signaux I+ et I− qui correspondent aux décisions directes d'incrémentation et de décrémentation sont transmis par les portes 48 et 50 au séquenceur de phase.

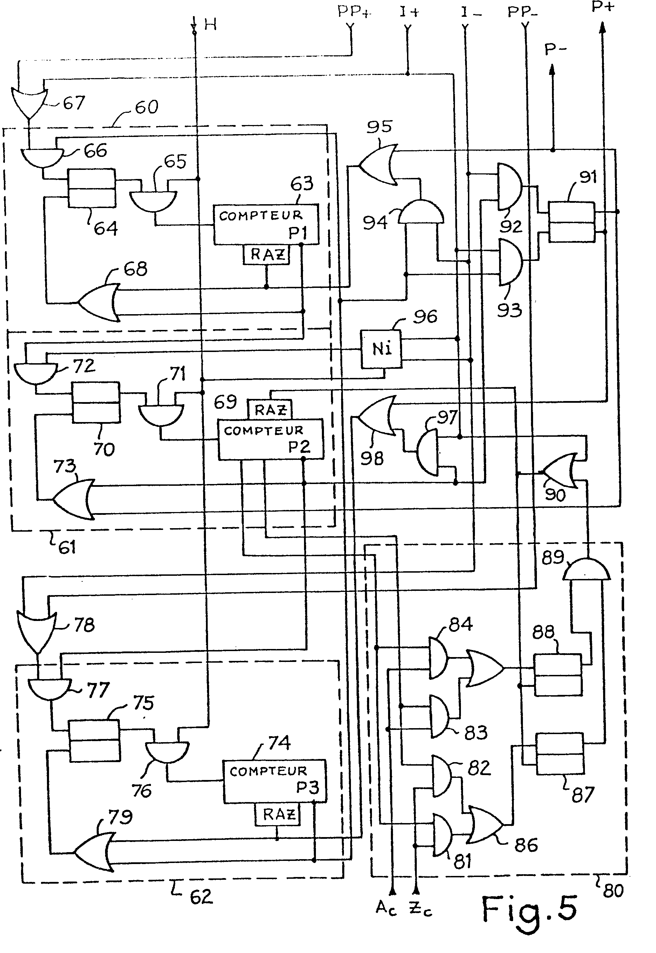

Un exemple de réalisation du séquenceur de phase 39 de la figure 3 est maintenant décrit à l'aide du schéma représenté à la figure 5. Le séquenceur de phase représenté à la figure 5 comprend, un dispositif séquenceur de phase positive 60, un dispositif séquenceur de phase «intermédiaire» 61 et un dispositif séquenceur de phase négative 62. Le dispositif séquenceur de phase positive comprend, un compteur 63 relié sur son entrée de comptage à un basculeur 64 au travers d'une porte ET 65 à deux entrées. La première entrée de la porte ET 65 est reliée à l'horloge 36 de la figure 3. La deuxième entrée de la porte ET 65 est reliée à la sortie du basculeur 64. Une première entrée du basculeur 64 est reliée à la sortie d'une porte ET 66 à deux entrées, et la deuxième entrée de remise à zéro du basculeur 64 est reliée à la sortie d'une porte OU 68 à deux entrées.

Le dispositif séquenceur de phase «intermédiaire» 61 comprend également, un compteur 69 relié sur son entrée de comptage à la sortie d'un basculeur 70 au travers d'une porte 71 à deux entrées. Une première entrée de la porte 71 est reliée à la sortie de l'horloge 36 de la figure 3 et la deuxième entrée de la porte 71 est reliée à la sortie du basculeur 70. Le basculeur 70 est relié sur sa première entrée à la sortie d'une porte ET à deux entrées 72 et par sa deuxième entrée de remise à zéro à la sortie d'une porte OU 73 à deux entrées.

Le dispositif séquenceur de phase négative 62 comprend également, un compteur 74 relié sur son entrée de comptage à la sortie d'une porte ET 76 à deux entrées. Une première entrée de la porte ET 76 est reliée à la sortie de l'horloge 36 de la figure 3 et la deuxième entrée est reliée à la sortie du basculeur 75. L'entrée de commande du basculeur 75 est reliée à la sortie d'une porte ET 77 à deux entrées et l'entrée de remise à zéro du basculeur 75 est reliée à la sortie d'une porte OU 79 à deux entrées. Les dispositifs séquenceur de phase 60, 61, 62 sont synchronisés à partir du circuit 80 composé des éléments logiques 81 à 89 ainsi que par les circuits 90 à 98. Le circuit 80 comprend quatre portes ET à deux entrées 81 à 84. Les sorties des portes 81 et 82 sont reliées respectivement aux entrées correspondantes d'une porte OU 86 dont la sortie est reliée à l'entrée de commande d'un basculeur 87. De même les sorties des portes 83 et 84 sont reliées respectivement aux entrées correspondantes d'une porte OU à deux entrées 85 dont la sortie est reliée à l'entrée de commande d'un basculeur 88. Les sorties des basculeurs 87 et 88 sont reliées respectivement aux entrées correspondantes d'une porte ET 89 à deux entrées. Les portes 81 et 82 reçoivent sur une première entrée la décision corrigée $Z_c$ provenant du circuit de correction 37 de la figure 3 et les portes 83 et 84 reçoivent sur une première entrée la décision corrigée $A_c$ provenant du circuit de correction 37 de la figure 3. Les deuxièmes entrées des portes 81 à 84 sont reliées respectivement à des sorties du compteur 69. La sortie de la porte 89 est reliée à une première entrée d'une porte OU 90 à deux entrées dont la deuxième entrée reçoit le signal I+ provenant du circuit d'incrémentation 38 de la figure 3. La sortie de la porte OU 90 est reliée aux entrées de remise à zéro du compteur 69 et des basculeurs 87 et 88. Le circuit logique 91 est un basculeur dont l'état indique à l'ensemble du dispositif à quelle phase positive ou négative, notée P+ ou P− correspondent les signaux reçus. Le basculeur 91 est commandé par les sorties des portes 92 et 93. La porte ET 92 est à deux entrées, une première entrée reçoit le signal I− transmis par le circuit d'incrémentation 38 de la figure 3, la deuxième entrée est reliée à la sortie de poids maximum P2 du compteur 69. La porte 93 a deux entrées, une première entrée reçoit le signal I+ transmis par le circuit d'incrémention 38 et la deuxième entrée est reliée à la sortie de poids maximum P3 du compteur 74. Le signal I− est également appliqué sur une première entrée d'une porte ET 94 dont la deuxième entrée est également reliée à la sortie de poids maximum P3 du compteur 74. La sortie de la porte ET 94 est reliée à une première entrée d'une porte OU 95 dont la deuxième entrée est reliée à la sortie du basculeur 91 qui transmet le signal de phase négative, notée P−. La sortie de la porte OU 95 est reliée aux entrées de remise à zéro du compteur 63 et à une première entrée de la porte OU 68 dont la deuxième entrée est reliée à la sortie de poids maximum P1 du compteur 63. Un circuit NI 96 est relié par sa sortie à une première entrée de la porte ET 72 dont la deuxième entrée est reliée à la sortie de poids maximum P1 du compteur 63. Le circuit NI 96 a deux entrées, une première entrée reçoit le signal I+ transmis par le circuit incrémenteur 38 de la figure 3 et la deuxième entrée reçoit le signal I− transmis par ce même circuit incrémenteur. Le circuit NI 96 est également validé par le signal d'horloge fourni par l'horloge 36 de la figure 3.

Le fonctionnement du dispositif représenté à la figure 5 est le suivant. Le séquenceur de phase vérifie qu'à la réception les contraintes imposées par le filtrage logique d'émission sont bien respectées. Il détermine pour cela que les phases positive et négative, respectivement P+ et P− correspondent aux phases positive de croissance ou négative décroissante du signal vocal et commande les corrections et décisions en conséquence dans les circuits de correction 37 et l'incrémenteur 38. Comme il a été indiqué précédemment la phase positive se caractérise par une partie croissante désignée par P+ où les incréments possibles fournis à l'atténuateur sont soit 0, soit +1 et il comprend également une partie de maintien à phase constante ou phase «intermédiaire», qui précède le passage du dispositif en phase négative de décroissance désignée par P− ou de retour en phase positive et pour laquelle aucun incrément +1 n'est donné. Les parties caractérisant la phase positive sont respectivement contrôlées par les dispositifs séquenceur de phase 60 et 61. La phase négative ou de décroissance du signal vocal qui suit la phase positive, est contrôlée par le dispositif séquenceur 62. Le dispositif séquenceur 60 détermine la durée de la phase positive, cette durée étant déterminée par le temps de comptage du compteur 63 dont le comptage est initialisé à partir du basculeur 64, de la porte 65 et de la porte 66. Lorsque l'initialisation est effectuée par le basculeur 64 et la porte 66, la porte 65 autorise les signaux d'horloge H à traverser la porte 65 pour commander la progression du compteur 63 aux instants élémentaires de parution du signal d'horloge toutes les 6 millisecondes. Si la capacité de comptage du compteur 63 est de huit, au bout de 42 millisecondes le compteur 63 atteint sa capacité maximum de comptage et émet un signal sur sa sortie P1 en direction de la porte OU 68 qui remet à zéro le basculeur 64, ce qui interdit toute nouvelle progression du compteur 63. La remise à zéro du basculeur 64 peut également avoir lieu, par une commande extérieure provenant de la sortie de la porte OU 95. Les dispositifs séquenceurs 61 et 62 ont un fonctionnement à peu près similaire. Le compteur 69 est initialisé à partir des circuits 70, 71 et 72 et la remise à zéro du basculeur 70 est assurée par la porte OU 73, soit lorsque le compteur 69 atteint sa capacité de comptage maximum ou soit par un signal extérieur appliqué à la porte 73 par la sortie du basculeur 91 délivrant le signal P+ de phase positive. Le circuit d'initialisation du dispositif séquenceur 62 est également composé par les circuits 75, 76 et 77 qui sont similaires aux circuits d'initialisation précédemment décrits. L'initialisation a lieu par la mise à 1 logique du basculeur 75, par la porte 77 et la mise à zéro du basculeur 75 est effectuée par la porte OU 79, soit lorsque le compteur 74 atteint sa capacité maximum ou encore par un signal extérieur provenant de la porte OU 98. Le basculeur 91 indique le sens d'évolution du signal vocal en délivrant sur ses sorties les signaux de phase positive P+ et de phase négative P− à destination des circuits de correction 37 et d'incrémentation 38. En l'absence de signaux Z et A reçus par la partie réception, le compteur 74 du dispositif séquenceur de phase négative 62 se charge à sa capacité maximum en délivrant, lorsqu'il est chargé, un signal sur sa sortie P3, et le basculeur de phase 91 est dans l'état P− correspondant à la phase négative. L'absence de signal reçu devra se traduire par une suite de démodulation de signaux «e» d'effacement qui n'ont aucun effet sur le dispositif. A la première décision I+ fournie par le circuit d'incrémentation 38 et appliquée à la porte OU 67 le compteur 63 est initialisé, le basculeur de phase 91 passe dans l'état P+ correspondant à la phase positive en présence du signal P3 appliqué sur la porte ET 93 et le compteur 74 du dispositif séquenceur de phase négative 62 est remis à zéro et reste à zéro par l'action de la porte OU 98. Le compteur 63 étant initialisé, compte successivement sept impulsions d'horloge et applique, lorsqu'il atteint sa capacité de comptage maximum, un signal par sa sortie P1 sur l'entrée correspondante de la porte OU 68 pour remettre à zéro le basculeur 64 et arrêter la progression du compteur 63. Le signal fourni par la sortie P1 du compteur 63 est également appliqué à l'entrée correspondante de la porte 72, et à la première décision nulle qui est ni une décision I+ ni une décision I− la porte NI 96 provoque l'initialisation du compteur 69 du dispositif séquenceur de phase intermédiaire en validant les circuits 70 à 72. Le compteur 69 est remis à zéro soit, à chaque nouvelle décision I+ appliquant un signal I+ sur l'entrée correspondante de la porte OU 90 soit, par un défaut de parité contrôlé à l'aide du circuit 80 qui indique que durant le comptage il y a eu un nombre impair de séquences ZZ où qu'une des deux décisions consécutives ZZ a été démodulée comme un signal d'effacement e. Le circuit 80 reçoit les séquences A corrigé $A_c$ où Z corrigées $Z_c$ fournies par le circuit de correction 37 à l'entrée du groupe de quatre portes 81 à 82 commandées par la première bascule du compteur 69. Si une séquence met en défaut l'alternance AZ caractéristique des séquences 0 d'incrémentation nulle, les deux basculeurs 87 et 88 sont tous deux placés dans l'état 1 logique pour commander par l'intermédiaire des portes 89 et de la porte OU 90 la remise à zéro du compteur 69. Lorsque le compteur 69 atteint sa capacité de comptage maximum, le minimum de durée de la phase intermédiaire ou de phase constante, est contrôlée et il peut y avoir après cette phase soit, une continuation de la phase positive soit, un passage en phase négative. Dans le premier cas, le premier I+ reçu par la porte OU 90 remet le compteur 69 à zéro qui se remet immédiatement à compter. Dans le deuxième cas le premier signal I− reçu, fait basculer le basculeur 91 dans l'état de phase P− qui initialise à nouveau le comptage du compteur 74 par la porte OU 78 et la porte ET 77 et remet à zéro les compteurs 63 et 69 par les portes OU 95 et 90. Dans le cas ou le compteur 69 atteint sa capacité de comptage maximum et dans le cas où un signal de présomption de phase négative PP− transmis par le circuit de correction 37 de la figure 3 est appliqué à la porte 78, le compteur 74 est à nouveau initialisé mais comme le basculeur de phase 91 indique une phase P+ positive, le compteur 74 est à nouveau arrêté puis remis à zéro, par la porte OU 98 et la porte ET 97 sur les entrées de laquelle sont appliqués un signal I+ et le signal transmis par la sortie P2 du compteur 69, avant qu'un signal I− transmis par l'incrémenteur 38 soit venu confirmer, par le changement d'état du basculeur 91, le passage en phase négative. De cette façon, si des corrections sont intervenues qui masquent la possibilité de passage en phase négative, lorsque la partie réception est en phase positive et lorsque la durée minimum, calculée par le compteur intermédiaire 69, est dépassée, dans le doute, le compteur 74 est démarré par anticipation. C'est le rôle de la première décision A non corrigée de confirmer ou d'infirmer cette hypothèse. Le déroulement de la phase négative est similaire à celui de la phase positive à la différence près qu'il n'y a pas de comptage intermédiaire similaire à celui effectué par le dispositif séquenceur 61 placé en série avec le dispositif séquence de phase positive 60.

Comme le compteur 74, le compteur 63 peut être mis en marche par anticipation par les portes 66 et 67, en cas de présomption de phase positive, par l'apparition du signal PP+, lorsque le compteur 74 a contrôlé en atteignant sa capacité de comptage maximum indiquée par le signal transmis par sa sortie P3, la durée minimum de 42 millisecondes de la phase négative. En l'absence d'une confirmation par une décision I+ fournie par le circuit d'incrémentation 38 de la figure 3, le compteur 63 est remis à zéro par une décision I− qui vient confirmer la continuation de la phase négative.

Bien que les principes de la présente invention aient été décrits ci-dessus, en relation avec un exemple particulier de réalisation, on comprendra que la portée de l'invention ne se limite pas à l'exemple décrit. On concevra, notamment que les fonctions du dispositif pourront être réalisées par tout autre moyen et particulièrement être intégrées tout ou partie dans un dispositif à microprocesseur. Plus particulièrement le circuit de compression pourra être formé par une mémoire pour mémoriser le signal de parole à émettre, couplée à un processeur de façon à retarder le signal de parole à émettre et régler l'amplitude du signal de parole à un niveau constant au moment de l'émission ainsi que pour atténuer le signal de parole directement reçu de la valeur d'atténuation du signal de parole précédemment retardé, pour appliquer le signal de parole atténué à l'entrée du circuit de filtrage logique. On comprendra également que l'invention pourra s'appliquer utilement à tous les procédés de codage de la parole en analogique ou en numérique. Dans une réalisation analogique, le canal auxiliaire de niveau sera alors numérique et les indications de niveau seront transmises à l'aide d'un multiplexage en fréquence avec les signaux de parole de la façon déjà mise en œuvre sur voie HF (haute fréquence), dans le système SYNCOMPEX connu.

Dans une réalisation numérique, le dispositif pourra avantageusement être appliqué à la transmission de la parole par paquet et multiplexage dans le temps. A vitesse moyenne dans la gamme V. UHF, un débit moyen de 16 k.bits/s pourra être envisagé, les canaux de transmission pouvant être à fréquence fixe ou à saut de fréquence. A vitesse de transmission plus réduite de l'ordre de 2400 bits/s le dispositif selon l'invention pourra trouver application dans la réalisation de vocodeur de toute gamme.

## Revendications

1. Dispositif (1) de traitement de la parole pour équipement émetteur-récepteur radioélectrique, adapté pour la transmission et la réception de la parole, du type comprenant un circuit de compression (11) de la dynamique du signal de parole pour maintenir le niveau de modulation de la parole à peu près constant durant l'émission de la parole et un expanseur (18) pour rétablir à la réception le niveau de parole avant sa compression, ainsi qu'un dispositif (17) de commande de l'expanseur sensible à la valeur de l'atténuation introduite par le circuit de compression (11) et transmise sur un canal radioélectrique de fréquence auxiliaire de l'équipement, caractérisé en ce que le circuit de compression (11) est un circuit de compression incrémental à action anticipée dans le temps comprenant une ligne à retard (14) reliée à un premier atténuateur variable (15) pour retarder le signal de parole et l'atténuer avant son émission ainsi qu'un deuxième atténuateur variable (15) du signal de parole, et en ce que le dispositif comprend en outre un circuit de filtrage logique (13) du niveau de parole d'émission couplé au deuxième atténuateur variable (16) pour commander les premier et deuxième atténuateur du circuit de compression (11) par pas d'atténuation constants, de façon à maintenir le niveau de parole d'émission à peu près constant et pour transmettre par le canal auxiliaire les valeurs d'atténuation incrémentales correspondantes, et en ce que le dispositif (17) de commande de l'expanseur (18) comprend un circuit d'interpolation (30, 33, 37, 38, 39) pour corriger les présomptions d'erreurs des signaux reçus représentatifs des valeurs d'atténuation introduites à l'émission par le circuit de filtrage logique (13).

2. Dispositif (1) de traitement de la parole pour équipements émetteurs-récepteurs radioélectriques adaptés pour la transmission et la réception de la parole, selon la revendication 1, les équipements émetteurs-récepteurs pouvant être couplés à un ou plusieurs autres équipements émetteurs-récepteurs par un même canal radioélectrique de transmission et possèdant chacun un même dispositif (1) de traitement de la parole, les valeurs d'atténuation du circuit de compression d'un équipement émetteur étant transmise par cet équipement sur un canal radioélectrique de fréquence auxiliaire, caractérisé en ce qu'il comprend un circuit de filtrage logique (13) sensible aux variations de niveau du terme syllabique de la parole pour transmettre sur le canal auxiliaire lorsque l'équipement émetteur-récepteur est en émission, une information incrémentale de niveau représentée par une suite d'éléments binaires ayant une première configuration lorsque le niveau avant compression du terme syllabique de la parole est en phase positive de croissance, une deuxième configuration lorsque le niveau du terme syllabique de la parole est en phase négative de décroissance et au moins une troisième configuration lorsque le niveau du terme syllabique conserve une valeur à peu près constante, ainsi qu'un circuit d'interpolation (30, 33, 37, 38, 39) pour d'une part présumer, lorsque l'équipement émetteur-récepteur est en réception, les phases, positives de croissance, négatives de décroissance et sans changement et traiter chaque suite d'éléments binaires reçue pour corriger les erreurs présumées entachant les éléments binaires reçus, en pondérant chaque suite d'éléments binaires reçus lorsqu'il y a doute sur la validité d'au moins un élément binaire d'une suite et en comparant l'état binaire de chaque suite pondérée en fonction de la phase présumée du signal vocal reçu, de l'état des éléments binaires de la suite, précédemment reçus, et en fonction des seules configurations possibles d'une suite et pour d'autre part, commander l'expanseur (18) en fonction de l'état binaire de chaque suite reçue traitée par le circuit d'interpolation pour restituer au mieux la dynamique du signal de parole avant sa compression par le dispositif de l'équipement émetteur.

3. Dispositif selon la revendication 2, caractérisé en ce que l'état du signal binaire d'une suite est corrigé par le circuit d'interpolation en fonction de l'état du signal binaire reçu qui le précède dans la suite.

4. Dispositif selon la revendication 2, caractérisé en ce que l'état du signal binaire d'une suite est corrigé par le circuit d'interpolation en fonction de l'état du signal binaire reçu qui le précède dans la suite et de l'état du signal binaire reçu qui lui succède dans la suite.

5. Dispositif selon l'une quelconque des revendications 2 à 4, caractérisé en ce que le circuit de compression (11) est constitué, d'une part, par une ligne à retard (14) couplée par sa sortie à l'entrée d'un atténuateur incrémental d'émission (15) pour retarder le signal de parole à émettre tout en maintenant le niveau de parole à peu près constant à la sortie de l'atténuateur d'émission et d'autre part, par un deuxième atténuateur incrémental (16) sur l'entrée duquel est appliqué directement le signal de parole à transmettre et dont la sortie est couplée à l'entrée du circuit de filtrage logique (13).

6. Dispositif selon l'une quelconque des revendications 2 à 4, caractérisé en ce que le circuit de compression (11) est constitué d'une mémoire, pour mémoriser le signal de parole à émettre, couplée à un processeur pour retarder le signal de parole à émettre et régler l'amplitude du signal de parole à un niveau constant au moment de l'émission ainsi que pour atténuer le signal de parole directement reçu de la valeur d'atténuation du signal de parole précédemment retardé pour appliquer le signal de parole atténué à l'entrée du circuit de filtrage logique.

7. Dispositif selon la revendication 5, caractérisé en ce que la sortie du deuxième atténuateur incrémental (16) est couplée à l'entrée du circuit de filtrage logique (13) par l'intermédiaire d'un détecteur de seuil (12) du niveau du signal de parole pour obtenir une atténuation variable croissante, décroissante ou constante.

8. Dispositif selon les revendications 5, 6 et 7, caractérisé en ce que le circuit de filtrage logique (13) comprend un compteur-décompteur (20) couplé par ses sorties aux entrées des atténuateurs incrémentals (15, 16) et relié par ses entrées de commande de comptage et de décomptage au détecteur de seuil (12) par l'intermédiaire d'une logique de commande (21, 22, 23, 24, 25, 26, 27) pour incrémenter le compteur-décompteur (20) d'une unité chaque fois que le niveau de parole augmente au-dessus d'un premier seuil prédéterminé ou pour décrémenter le compteur-décompteur d'une unité chaque fois que le niveau de parole décroît en dessous d'un deuxième seuil prédéterminé et en ce que la logique de commande comprend un basculeur (21) commandé dans un premier état lorsque le niveau de parole dépasse le premier seuil prédéterminé et commandé dans un deuxième état lorsque le niveau de parole décroît en dessous du deuxième seuil prédéterminé, un compteur temporisateur (27) et des portes de commande validées par le basculeur (21) et par la sortie du compteur temporisateur (27) pour placer le compteur-décompteur (20) en mode de comptage ou de décomptage et pour interdire le changement de phase de comptage et de décomptage du compteur-décompteur (20) s'il ne s'est pas écoulé un temps de durée minimum déterminée par la capacité de comptage maximum de compteur temporisateur (27) depuis le dernier changement de phase.

9. Dispositif selon l'une quelconque des revendications 2 à 8, caractérisé en ce que le circuit d'interpolation comprend un circuit de correction 37 des signaux binaires en cours de réception pour maintenir l'atténuation de l'expanseur à la valeur déduite lors de la réception des signaux précédents dans le cas où l'état du signal binaire reçu par comparaison à l'état des signaux binaires reçus antérieurement ou postérieurement est présumé erroné.

10. Dispositif selon l'une quelconque des revendications 2 à 9, caractérisé en ce que le circuit d'interpolation comprend un séquenceur de phase constitué par un premier séquenceur (60) de phase positive pour fixer la durée minimum de la phase positive à une valeur constante et déclencher à la fin de cette durée un deuxième séquenceur (61) de phase intermédiaire, de durée également constante, pour déclencher à son tour à la fin de la durée de la phase intermédiaire, la progression d'un troisième séquenceur de phase (62) négative pour fixer la durée minimum de la phase négative, les sorties des deuxième et troisième séquenceurs étant reliées aux entrées de commande respectives d'un basculeur de phase (91) qui délivre au circuit de correction (37) les indications de phase positive (P +) et négative (P −) correspondantes.

11. Dispositif selon l'une quelconque des revendications 2 à 10, caractérisé en ce que le circuit d'interpolation comprend également un premier ensemble de registres (30) pour stocker temporairement, d'une part, les éléments binaires de chaque suite de l'information incrémentale de niveau (18) qui sont successivement reçues sur le canal de fréquence auxiliaire et d'autre part, un signal d'effacement ou de pondération remplaçant les décisions d'accroissement ou de diminution du rapport d'atténuation lorsqu'il y a doute sur la valeur des décisions reçues, le circuit de correction (37) des signaux reçus étant couplé par ses entrées aux sorties du premier ensemble de registres, pour stocker temporairement les signaux corrigés, un circuit d'incrémentation (38) couplé au circuit de correction pour commander en plus ou en moins les valeurs d'atténuation à pas constant de l'expanseur (18), le séquenceur de phase étant (39) relié au circuit de correction (37) et au circuit incrémenteur (38) pour reconstituer les phases de croissance ou de décroissance du signal de parole et les appliquer aux entrées correspondantes du circuit de correction.

12. Dispositif selon l'une quelconque des revendications 9 à 11, caractérisé en ce que le circuit de correction (37) comprend, un premier ensemble de circuits (40, 41, 42) pour déterminer une décision d'accroissement corrigée ($A_c$) lorsqu'un signal d'effacement (e) a été précédemment reçu par la partie réception alors que le séquenceur de phase indique un traitement en phase de décroissance (P−) du signal vocal, et que les décisions reçues à l'instant présent et à l'instant directement antérieur à l'instant précédent étaient des décisions (Z) de décroissance et un deuxième ensemble de circuits (43, 44, 45) pour déterminer une décision de décroissance corrigée ($Z_c$) lorsqu'un signal d'effacement (e) a été précédemment reçu par la partie réception alors que le séquenceur de phase indique un traitement en phase de croissance (P+) du signal vocal et que les décisions reçues à l'instant présent et à l'instant directement antérieur à l'instant précédent étaient des décisions ($A_c$) de croissance.

13. Dispositif selon la revendication 11, caractérisé en ce que le circuit d'incrémentation (38) délivre un signal d'incrémentation à destination de l'expanseur (18) chaque fois qu'une décision d'accroissement corrigée ($A_c$) est fournie par le circuit de correction (37) et un signal de décrémentation chaque fois qu'une décision de décroissance corrigée ($Z_c$) est fournie par le circuit de correction (37).

14. Dispositif selon l'une quelconque des revendications 11 à 13, caractérisé en ce que le circuit d'incrémentation (38) comprend également des circuits permettant de récupérer des décisions indéterminées qui en phase négative (P−) de décroissance sont considérées comme une valeur moyenne de −1/2 puisqu'elles ne peuvent être corrigées ni en donnant au compteur-décompteur (20) une valeur d'incrémentation nulle ni une valeur de décrémentation et qui en phase de croissance P+ sont considérées comme ayant une valeur moyenne de +1/2.

**Patentansprüche**

1. Sprachaufbereitungsvorrichtung (1) für eine Sende-Empfangs-Funkanlage, ausgelegt für die Übertragung und den Empfang von Sprache, mit einer Kompressionsschaltung (11) für die Dynamik des Sprachsignals, um den Modulationspegel der Sprache während des Aussendens der Sprache annähernd konstant zu halten, und einem Expander (18) zur empfangsseitigen Wiederherstellung des Sprachpegels vor seiner Kompression, sowie mit einer Vorrichtung (17) zur Steuerung des Expanders, welche auf den Dämpfungswert anspricht, der durch die Kompressionsschaltung (11) eingeführt wurde und auf einem Hilfsfrequenz-Funkkanal der Anlage übertragen wird, dadurch gekennzeichnet, dass die Kompressionsschaltung (11) eine in Inkrementen arbeitende Kompressionsschaltung mit zeitlich vorgezogener Wirkung ist, die eine an ein erstes variables Dämpfungsglied (15) angeschlossene Verzögerungsleitung (14) zur Verzögerung des Sprachsignals und zur Dämpfung desselben vor seiner Aussendung sowie ein zweites variables Dämpfungsglied (16) für das Sprachsignal enthält, und dass die Vorrichtung ferner eine logische Filterschaltung (13) für den sendeseitigen Sprachpegel aufweist, die an das zweite variable Dämpfungsglied (16) angeschlossen ist, um das erste und das zweite Dämpfungsglied der Kompressionsschaltung (11) in konstanten Dämpfungsschritten zu steuern, so dass der sendeseitige Sprachpegel annähernd konstant gehalten wird, und um über den Hilfskanal die entsprechenden schrittweise grösser werdenden Dämpfungswerte zu übertragen, und dass die Steuervorrichtung (17) für den Expander (18) eine Interpolationsschaltung (30, 33, 37, 38, 39) zum Korrigieren der angenommenen Fehler der Empfangssignale, welche für die sendeseitig durch die logische Filterschaltung (13) eingeführten Dämpfungswerte repräsentativ sind, umfasst.

2. Sprachaufbereitungsvorrichtung (1) für Sende-Empfangs-Funkanlagen, ausgelegt für die Übertragung und den Empfang von Sprache, nach Anspruch 1, wobei die Sende-Empfangs-Geräte an eine oder mehrere weitere Sende-Empfangs-Geräte über denselben Funkübertragungskanal angekoppelt sein können und jeweils die gleiche Sprachaufbereitungsvorrichtung (1) besitzen, wobei die Dämpfungswerte der Kompressionsschaltung eines Sendegerätes durch dieses Gerät auf einem Hilfsfrequenz-Funkkanal übertragen werden, dadurch gekennzeichnet, dass sie eine logische Filterschaltung (13) aufweist, welche auf die Pegeländerungen des Silbenterms der Sprache anspricht, um auf dem Hilfskanal im Sendebetrieb des Sende-Empfangs-Gerätes eine Pegelinkrement-Information zu übertragen, welche durch eine Folge von Binärelementen dargestellt ist, die eine erste Konfiguration aufweisen, wenn der Pegel vor der Kompression des Silbenterms der Sprache sich in einer positiven Zunahmephase befindet, eine zweite Konfiguration aufweist, wenn der Pegel des Silbenterms der Sprache sich in negativer Abnahmephase befindet, und wenigstens eine dritte Konfiguration aufweist, wenn der Pegel des Silbenterms einen annähernd konstanten Wert beibehält, sowie eine Interpolationsschaltung (30, 33, 37, 38, 39) umfasst, um einerseits im Empfangsbetrieb des Sende-Empfangs-Gerätes die positiven Zunahmephasen, negativen Abnahmephasen und änderungslosen Phasen als voraussichtlich zutreffend anzunehmen und jede Folge von empfangenen Binärelementen aufzubereiten, um die vermuteten Fehler zu korrigieren, mit denen die empfangenen Binärelemente behaftet sind, indem jede Folge von empfangenen Binärelementen gewichtet wird, wenn ein Zweifel an der Gültigkeit wenigstens eines Binärelementes einer Folge besteht, und indem ein Vergleich des Binärzustandes jeder gewichteten Folge vorgenommen wird in Abhängigkeit von der angenommenen Phase des empfangenen Sprachsignals, dem Zustand der zuvor empfangenen Binärelemente der Folge und in Abhängigkeit von den einzigen möglichen Konfigurationen einer Folge, und um andererseits den Expander (18) in Abhängigkeit von dem Binärzustand jeder empfangenen und durch die Interpolationsschaltung aufbereiteten Folge so zu steuern, dass die Dynamik des Sprachsignals vor seiner Kompression durch die Vorrichtung des Sendegeräts in der bestmöglichen Weise wiederhergestellt wird.

3. Vorrichtung nach Anspruch 2, dadurch gekennzeichnet, dass der Zustand des Binärsignals einer Folge durch die Interpolationsschaltung in Abhängigkeit von dem Zustand des empfangenen Binärsignals, welches ihm in der Folge vorausgeht, korrigiert wird.

4. Vorrichtung nach Anspruch 2, dadurch gekennzeichnet, dass der Zustand des Binärsignals einer Folge korrigiert wird durch die Interpolationsschaltung in Abhängigkeit von dem Zustand des empfangenen Binärsignals, welches ihm in der Folge vorausgeht, und von dem Zustand des empfangenen Binärsignals, welches ihm in der Folge nachfolgt.

5. Vorrichtung nach einem der Ansprüche 2 bis 4, dadurch gekennzeichnet, dass die Kompressionsschaltung (11) einerseits gebildet ist aus einer Verzögerungsschaltung (14), die an ihrem Ausgang mit dem Eingang eines sendeseitigen und schrittweise arbeitenden Dämpfungsgliedes (15) verbunden ist, um das auszusendende Sprachsignal zu verzögern und gleichzeitig den Sprachpegel am Ausgang des sendeseitigen Dämpfungsgliedes annähernd konstant zu halten, und andererseits durch ein zweites schrittweise arbeitendes Dämpfungsglied (16), an dessen Eingang das zu übertragende Sprachsignal direkt angelegt ist und dessen Ausgang an den Eingang der logischen Filterschaltung (13) angekoppelt ist.

6. Vorrichtung nach einem der Ansprüche 2 bis 4, dadurch gekennzeichnet, dass die Kompressionsschaltung (11) aus einem Speicher gebildet ist, um das auszusendende Sprachsignal zu speichern, angekoppelt an einen Prozessor zur Verzögerung des auszusendenden Sprachsignals und zur Einstellung der Amplitude des Sprachsignals auf einen konstanten Pegel im Zeitpunkt des Aussendens, und zur Dämpfung des direkt empfangenen Sprachsignals um den Dämpfungswert des zuvor verzögerten Sprachsignals, damit das gedämpfte Sprachsignal an den Eingang der logischen Filterschaltung angelegt wird.

7. Vorrichtung nach Anspruch 5, dadurch gekennzeichnet, dass der Ausgang des zweiten schrittweise arbeitenden Dämpfungsgliedes (16) an den Eingang der logischen Filterschaltung (13) über einen Schwellwertdetektor (12) für den Pegel des Sprachsignals angekoppelt ist, um eine variable zunehmende, abnehmende oder konstante Dämpfung zu erhalten.

8. Vorrichtung nach den Ansprüchen 5, 6 und 7, dadurch gekennzeichnet, dass die logische Filterschaltung (13) einen Aufwärts/Abwärts-Zähler (20) umfasst, dessen Ausgänge an die Eingänge der schrittweise arbeitenden Dämpfungsglieder (15, 16) angekoppelt sind und dessen Aufwärts- und Abwärts-Steuereingänge an den Schwellwertdetektor (12) über eine Steuerlogik (21, 22, 23, 24, 25, 26, 27) angeschlossen sind, um den Aufwärts/Abwärts-Zähler (20) um eine Einheit jedesmal dann weiterzuschalten, wenn der Sprachpegel über einen ersten vorbestimmten Schwellwert ansteigt, oder den Aufwärts/Abwärts-Zähler um eine Einheit jedesmal dann herunterzuschalten, wenn der Sprachpegel unter einen zweiten vorbestimmten Schwellwert absinkt, und dass die Steuerlogik eine Kippschaltung (21) aufweist, die in einen ersten Zustand gesteuert wird, wenn der Sprachpegel den ersten vorbestimmten Schwellwert überschreitet, und in einen zweiten Zustand gesteuert wird, wenn der Sprachpegel unter den zweiten vorbestimmten Schwellwert absinkt, einen Zeitverzögerungszähler (27) sowie Steuertorschaltungen umfasst, die durch die Kippschaltung (21) und durch den Ausgang des Zeitverzögerungszählers (27) freigegeben werden, um den Aufwärts/Abwärts-Zähler (20) in den Aufwärts- oder Abwärts-Zählbetrieb zu setzen und um die Veränderung der Aufwärtszählphase und der Abwärtszählphase des Aufwärts/Abwärts-Zählers (20) zu verhindern, wenn nicht seit der letzten Phasenänderung eine Zeitspanne einer minimalen Dauer abgelaufen ist, welche durch die maximale Zählkapazität des Zeitverzögerungszählers (27) bestimmt ist.

9. Vorrichtung nach einem der Ansprüche 2 bis 8, dadurch gekennzeichnet, dass die Interpolationsschaltung eine Schaltung 37 zur Korrektur der Binärsignale im Verlaufe des Empfanges aufweist, um die Dämpfung des Expanders auf dem Wert zu halten, der beim Empfang der vorausgehenden Signale für den Fall abgeleitet wurde, dass der Zustand des empfangenen Binärsignals verglichen mit dem Zustand der zuvor oder nachher empfangenen Binärsignale als fehlerhaft angenommen wird.

10. Vorrichtung nach einem der Ansprüche 2 bis 9, dadurch gekennzeichnet, dass die Interpolationsschaltung eine Phasen-Folgesteuerung umfasst, die gebildet ist aus einer ersten Folgesteuerung (60) für positive Phase, um die minimale Dauer der positiven Phase auf einen konstanten Wert festzulegen und am Ende dieser Dauer eine zweite Folgesteuerung (61) für die Zwischenphase auszulösen, deren Dauer ebenfalls konstant ist, um ihrerseits am Ende der Dauer der Zwischenphase die Fortschaltung einer dritten Folgesteuerung (62) für negative Phase auszulösen, um die minimale Dauer der negativen Phase festzulegen, wobei die Ausgänge der zweiten und der dritten Folgesteuerung mit den jeweiligen Steuereingängen einer Phasen-Kippschaltung (91) verbunden sind, die an die Korrekturschaltung (37) die entsprechenden Anzeigen für positive Phase (P+) und negative Phase (P−) abgibt.

11. Vorrichtung nach einem der Ansprüche 2 bis 10, dadurch gekennzeichnet, dass die Interpolationsschaltung ferner eine erste Gruppe von Registern (30) umfasst, um vorübergehend einerseits die Binärelemente jeder Folge der inkrementalen Pegelinformation (18) zu speichern, die nacheinander auf dem Hilfsfrequenz-Kanal empfangen werden, und andererseits ein Lösch- oder Wichtungssignal zu speichern, welches die Zunahme- oder Abnahme-Entscheidungen für das Dämpfungsverhältnis ersetzt, wenn der Wert der empfangenen Entscheidungen zweifelhaft ist, wobei die Korrekturschaltung (37) für die Empfangssignale mit ihren Eingängen an die Ausgänge der ersten Gruppe von Registern angeschlossen ist, um vorübergehend die korrigierten Signale zu speichern, wobei eine Inkrementierschaltung (38) an die Korrekturschaltung angekoppelt ist, um die in konstanten Schritten gestuften Dämpfungswerte des Expanders (18) nach plus oder nach minus zu steuern, wobei die Phasen-Folgesteuerung (39) an die Korrekturschaltung (37) und an die Inkrementierschaltung (38) angeschlossen ist, um die Zunahme- oder Abnahmephasen für das Sprachsignal wiederherzustellen und sie an die entsprechenden Eingänge der Korrekturschaltung anzulegen.

12. Vorrichtung nach einem der Ansprüche 9 bis 11, dadurch gekennzeichnet, dass die Korrekturschaltung (37) eine erste Gruppe von Schaltungen (40, 41, 42) umfasst, um eine korrigierte Zunahmeentscheidung (A$_c$) zu bestimmen, wenn ein Löschsignal (e) zuvor durch den Empfangsteil empfangen wurde, während die Phasen-Folgesteuerung eine Aufbereitung in der Abnahmephase (P−) des Sprachsignals anzeigt, und die Entscheidungen, die im vorliegenden Zeitpunkt und zu dem dem vorliegenden Zeitpunkt unmittelbar vorausgehenden Zeitpunkt empfangen wurden, Abnahmeentscheidungen (Z) waren, und eine zweite Gruppe von Schaltungen (43, 44, 45) umfasst, um eine korrigierte Abnahmeentscheidung (Z$_c$) zu bestimmen, wenn ein Löschsignal (e) zuvor durch den Empfangsteil empfangen wurde, während die Phasen-Folgesteuerung eine Aufbereitung in der Zunahmephase (P+) des Sprachsignals anzeigt und die Entscheidungen, welche im vorliegenden Zeitpunkt und zu dem dem vorliegenden Zeitpunkt unmittelbar vorausgehenden Zeitpunkt empfangen wurden, Zunahmeentscheidungen (A$_c$) waren.

13. Vorrichtung nach Anspruch 11, dadurch gekennzeichnet, dass die Inkrementierschaltung (38) ein Inkrementiersignal für den Expander (18) jedesmal dann abgibt, wenn eine korrigierte Zunahmeentscheidung (A$_c$) von der Korrekturschaltung (37) geliefert wird, und ein Dekrementiersignal jedesmal dann abgibt, wenn eine korrigierte Abnahmeentscheidung (Z$_c$) von der Korrekturschaltung (37) geliefert wird.

14. Vorrichtung nach einem der Ansprüche 11 bis 13, dadurch gekennzeichnet, dass die Inkrementierschaltung (38) ferner Schaltungen umfasst, die es gestatten, unbestimmte Entscheidungen rückzugewinnen, die in der negativen Abnahmephase (P−) als ein Mittelwert von −1/2 angenommen werden, da sie nicht korrigiert werden können, weder indem der Aufwärts/Abwärts-Zähler (20) den Inkrementierwert Null noch einen Dekrementierwert erhält, und die in der Zunahmephase P+ als einen Mittelwert von +1/2 aufweisend angenommen werden.

**Claims**

1. Speech processing device (1) for a radioelectric transmitter-receiver equipment, adapted for the transmission and the reception of speech, of the type comprising a circuit (11) for the compression of the volume range of the speech signal to maintain almost constant the modulation level of the speech during the transmission of the speech, and an expander (18) for restoring upon reception the speech level prior to its compression, as well as a device (17) for controlling the expander which is sensitive to the value of the attenuation introduced by the compression circuit (11) and transmitted on a radioelectric auxiliary frequency channel of the equipment, characterized in that the compression circuit (11) is an incremental compression circuit acting with anticipation in time and comprising a delay line (14) connected to a first variable attenuator (15) to delay the speech signal and to attenuate it prior to its transmission, as well as a second variable speech signal attenuator (16), and in that the device further comprises a logic filter circuit (13) for the level of the speech upon transmission coupled to the second variable attenuator (16) to control the first and second attenuators of the compression circuit (11) with constant attenuation steps, in a manner to maintain almost constant the level of speech upon transmission and to transmit the corresponding incremental attenuation values on the auxiliary channel, and in that the control device (17) of the expander (18) comprises an interpolation circuit (30, 33, 37, 38, 39) to correct the presumption of errors of the received signals which are representative of the attenuation values introduced by the logic filter circuit (13) upon transmission.

2. Speech processing device (1) for radioelectric transmitter-receiver equipments, adapted for the transmission and the reception of speech, according to claim 1, the transmitter-receiver equipments being susceptible to be coupled to at least one or a plurality of further transmitter-receiver equipments through the same radioelectric transmission channel, and each having the same speech processing device (1), the attenuation values of the compression circuit of a transmitter equipment being transmitted by this equipment on an auxiliary frequency radioelectric channel, characterized in that it comprises a logic filter circuit (3) sensitive to the level variations of the syllabic term of speech to transmit on the auxiliary channel when the transmitter-receiver equipment is in the transmission mode an incremental level information represented by a sequence of binary elements having a first configuration when the level prior to the compression of the syllabic term of speech is in positive ascending phase, a second configuration when the level of the syllabic term of speech is in negative descending phase and at least a third configuration when the level of the syllabic term maintains a substantially constant value, as well as an interpolation circuit (30, 33, 37, 38, 39) susceptible to, on the one hand, presume, when the transmitter-receiver equipment is in the reception mode, the positive ascending, negative descending phases and the phases without change, and to process each sequence of binary elements received to correct the presumed errors accompanying the received binary elements, by weighting each sequence of binary elements received when there is a doubt on the validity of at least one binary element of a sequence, and by comparing the binary state of each weighted sequence as a function of the presumed phase of the received vocal signal, of the state of the binary elements of the sequence which have been previously received, and in function of the only possible configurations of a sequence, and, on the other hand, to control the expander (18) in function of the binary state of each received sequence processed by the interpolation circuit to restore in the best possible manner the volume range of the speech signal prior to its compression by the device of the transmitter equipment.

3. Device according to claim 2, characterized in that the state of the binary signal of a sequence is corrected by the interpolation circuit in function of the state of the binary signal received which precedes it in the sequence.

4. Device according to claim 2, characterized in that the state of the binary signal of a sequence is corrected by the interpolation circuit in function of the state of the binary signal received which precedes it in the sequence and of the state of the binary signal received which follows it in the sequence.

5. Device according to any of claims 2 to 4, characterized in that the compression circuit (11) is formed, on the one hand, by a delay line (14) coupled on its output to the input of an incremental transmission attenuator (15) to delay the speech signal to be transmitted while the speech level is maintained substantially constant at the output of the transmission attenuator, and, on the other hand, by a second incremental attenuator (16) to the input of which the speech signal to be transmitted is directly applied and the output of which is coupled to the input of the logic filter circuit (13).

6. Device according to any of claims 2 to 4, characterized in that the compression circuit (11) is constituted by a memory to store the speech signal to be transmitted, coupled to a processor to delay the speech signal to be transmitted and to adjust the amplitude of the speech signal to a constant level upon transmission, and to attenuate the directly received speech signal by the attenuation value of the previously delayed speech signal to apply the attenuated speech signal to the input of the logic filter circuit.

7. Device according to claim 5, characterized in that the output of the second incremental attenuator (16) is coupled to the input of the logic filter circuit (13) through a threshold detector (12) for the level of the speech signal to obtain a variable ascending, descending or constant attenuation.

8. Device according to claims 5, 6 and 7, characterized in that the logic filter circuit (13) comprises an up-down counter (20) coupled on its outputs to the inputs of the incremental attenuators (15, 16) and connected on its up-down control inputs to the threshold detector (12) through a control logic (21, 22, 23, 24, 25, 26, 27) to increment the up-down counter (20) by one unit each time the speech level increases above a first predetermined threshold or to decrement the up-down counter by one unit each time the speech level decreases below a second predetermined threshold, and in that the control logic comprises a flip-flop (21) controlled into a first state when the speech level exceeds the first predetermined threshold and controlled into a second state when the speech level decreases below the second predetermined threshold, a timing counter (27) and control gates enabled by the flip-flop (21) and by the output of the timing counter (27) to put the up-down counter (20) into the upward or downward counting mode, and to disable the change of upward counting and downward counting phase of the up-down counter (20) when a time of a minimum duration determined by the maximum counting capacity of the timing counter (27) since the last change of phase has not elapsed.

9. Device according to any of claims 2 to 8, characterized in that the interpolation circuit comprises a circuit (37) for the correction of the binary signals in the course of reception to maintain the attenuation of the expander at the value obtained upon the reception of the preceding signals in the case that the state of the received binary signal as compared to the state of the previously of subsequently received binary signals is presumed to be erroneous.

10. Device according to any of claims 2 to 9, characterized in that the interpolation circuit comprises a phase sequencer constituted by a first sequencer (60) of positive phase to fix the minimum duration of the positive phase to a constant value and to activate at the end of this duration a second sequencer (61) of intermediate phase which likewise has a constant duration, to activate, in turn, at the end of the duration of the intermediate phase, the progression of a third sequencer (62) of negative phase to fix the minimum duration of the negative phase, the outputs of the second and third sequencers being connected to the respective control inputs of a phase flip-flop (91) supplying to the correction circuit (37) the corresponding indications of positive phase (P+) and negative phase (P−).

11. Device according to any of claims 2 to 10, characterized in that the interpolation circuit further comprises a first set of registers (30) to store temporarily, on the one hand, the binary elements of each sequence of the incremental level information (18) which are successively received on the auxiliary frequency channel and, on the other hand, in invalidation or weighting signal replacing the decisions of increase or decrease of the attenuation ratio when there is a doubt on the value of the received decisions, the circuit (37) for the correction of the received signals being coupled on its inputs to the outputs of the first set of registers to temporarily store the corrected signals, an incrementation circuit (38) coupled to the correction circuit to control the constant step attenuation values of the expander (18) in the positive or negative sense, the phase sequencer (39) being connected to the correction circuit (37) and to the incrementing circuit (38) to restore the ascending or descending phases of the speech signal and to apply them to the corresponding inputs of the correction circuit.

12. Device according to any of claims 9 to 11, characterized in that the correction circuit (37) comprises a first set of circuits (40, 41, 42) to determine a corrected ascending decision ($A_c$)

when the invalidation signal (e) has been previously received by the reception portion while the phase sequencer indicates a processing in the descending phase (P−) of the vocal signal, and the decisions received at the present moment and at the moment directly preceding the present moment were descending decisions (Z), and a second set of circuits (43, 44, 45) to determine a corrected descending decision ($Z_c$) when an invalidation signal (e) has been previously received by the reception portion while the phase sequencer indicates a processing in the ascending phase (P+) of the vocal signal, and the decisions received at the present moment and the moment directly preceding the present moment were ascending decisions ($A_c$).

13. Device according to claim 11, characterized in that the incrementation circuit (38) supplies an incrementation signal to the expander (18) each time a corrected ascending decision ($A_c$) is supplied by the correction circuit (37), and a decrementation signal each time a corrected descending decision ($Z_c$) is supplied by the correction circuit (37).

14. Device according to any of claims 11 to 13, characterized in that the incrementation circuit (38) further comprises circuits permitting to recover indetermined decisions which, in the negative descending phase (P−), are considered being a mean value −1/2 since they cannot be corrected, neither by giving the up-down counter (20) a zero incrementation value nor a decrementation value, and which, in the ascending phase P+ are considered being a mean value +1/2.

Fig.1

0 109 880

Fig.2

Fig.3

SEQUENCEUR DE PHASE

CIRCUIT DE CORRECTION

CIRCUIT D'INCRÉMENTATION

Fig.4

Fig.5